# EUROPÄISCHE PATENTSCHRIFT

(11) **EP 1 121 542 B1**
(45) Veröffentlichungstag und Bekanntmachung des Hinweises auf die Patenterteilung: **22.01.2003**
(21) Anmeldenummer: 99953779.8
(22) Anmeldetag: 12.10.1999
(51) Int. Cl.: F16F 9/32, F16F 9/36

(54) **KOLBEN MIT STÜTZSTEGEN FÜR EINE KOLBEN-ZYLINDER-ANORDNUNG, INSBESONDERE STOSSDÄMPFERKOLBEN**
PISTON WITH SUPPORT WEBS FOR A PISTON-CYLINDER ARRANGEMENT, ESPECIALLY A SHOCK ABSORBER PISTON
PISTON AVEC NERVURES D'APPUI POUR ENSEMBLE PISTON-CYLINDRE, EN PARTICULIER PISTON AMORTISSEUR

(30) Priorität: 14.10.1998 DE 19847342
(43) Veröffentlichungstag der Anmeldung: 08.08.2001
(73) Patentinhaber: GKN Sinter Metals GmbH, 42477 Radevormwald (DE)
(72) Erfinder: CASELLAS, Antonio, D-53721 Siegburg (DE); MAY, Ewald, D-53175 Bonn (DE)
(74) Vertreter: Patentanwälte Maxton & Langmaack
(86) Internationale Anmeldenummer: EP9907641
(87) Internationale Veröffentlichungsnummer: WO00022317

(56) Entgegenhaltungen:
- EP-A- 0 345 561
- EP-A- 0 407 865
- EP-A- 0 658 611
- DE-A- 4 421 968
- DE-U- 29 623 140
- US-A- 5 785 160

## Beschreibung

Aus EP-A-0 658 611 ist ein Stoßdämpferkolben bekannt, der einen Kolbenkörper aufweist, der auf seiner Umfangsfläche mit einem umlaufenden Steg versehen ist, an den sich eine Vielzahl von in Achsrichtung verlaufenden Stegen auf einer Seite des umlaufenden Stegs anschließt. Auf diesen Kolbenkörper ist im Spritzgießverfahren eine Dichtung aus thermoplastischem Kunststoff aufgespritzt, wobei insbesondere die sich in axialer Richtung erstreckenden Stege mit ihren dazwischen liegenden, voll mit Dichtungswerstoff ausgefüllten Nuten der zuverlässigen Verankerung des Dichtungswerkstoffs und der Führung des Kolbens dienen. Die im Spritzguß aufgebrachte Dichtung ermöglicht eine enge Tolerierung, um das sogenannte "blow-by" zu vermeiden und so eine zuverlässige Abdichtung der einander zugeordneten Zylinderräume zu bewirken. Das Verfahren zur Herstellung derartiger spritzgegossener Dichtungen ist verhältnismäßig aufwendig.

Aus US-A-3 212 411 ist eine Kolben-Zylinder-Anordnung bekannt, deren Kolbenkörper auf seiner Umfangsfläche eine Vielzahl von umlaufenden Rillen aufweist. Zum Aufbringen der Dichtung ist ein napfförmiger Vorformling aus PTFE (Polytetrafluorethylen) vorgesehen, der zunächst auf den Kolbenkörper lose aufgesetzt wird. Der so vorbereitete Kolbenkörper wird anschließend zunächst in einen hoch aufgeheizten Formund Kalibrierzylinder eingedrückt, wobei unter Wärmeeinfluß das PTFE-Material in die Rillen auf der Umfangsfläche des Kolbenkörpers eingepreßt wird. Anschließend wird der Kolbenkörper mit der aufgepreßten Dichtung in einem entsprechend ausgebildeten Kühlzylinder abgekühlt. Die Rillen sind vollständig mit dem Dichtungswerkstoff ausgefüllt, um so eine formschlüssig-feste Verbindung der Dichtung mit der Umfangsfläche des Kolbenkörpers zu bewirken. Für den Einsatz als Stoßdämpferkolben muß anschließend noch die die Stirnfläche des Kolbenkörpers auf einer Seite überdeckende Bodenfläche des Vorformling entfernt werden.

Aus EP-A-682 190 ist ein Stoßdämpferkolben bekannt, der sich in seiner Herstellung von dem vorstehend beschriebenen Verfahren im wesentlichen nur dadurch unterscheidet, daß zum Aufbringen der Dichtung statt eines napfförmigen Vorformlings eine gestanzte Kreisringscheibe eingesetzt wird. Diese Kreisringscheibe wird auf ein Ende des Kolbenkörpers aufgesetzt. Der so vorbereitete Kolbenkörper wird wiederum in einen aufgeheizten Form- und Kalibrierzylinder eingepreßt, wobei die Kreisringscheibe als Band auf die Umfangsfläche des Kolbenkörpers umgelegt und anschließend in die in Umfangsrichtung des Kolbenkörpers verlaufenden Rillen unter Wärmeeinfluß eingepreßt wird. Anschließend wird der mit seiner aufgepreßten Dichtung versehene Kolben durch ein Kühlrohr geführt. Der Dichtungswerkstoff füllt auch hierbei die Rillen praktisch vollständig aus, so daß die Dichtung formschlüssig-fest mit der Umfangsfläche des Kolbenkörpers verbunden ist.

Die beiden vorstehend beschriebenen Verfahren weisen den Nachteil auf, daß für das Umformen und das Einpressen des Dichtungsmaterials in die Rillen auf der Umfangsfläche des Kolbenkörpers erhebliche Preßdrücke erforderlich sind und das die Dichtung bildende Dichtungsmaterial starken Umformungen unterworfen wird, die nachteilig die Struktur des Dichtungswerkstoffs beeinflußt.

Der Erfindung liegt die Aufgabe zugrunde, einen Kolben, insbesondere Stoßdämpferkolben zu schaffen, bei dem die vorstehend beschriebenen Nachteile vermieden sind.

Diese Aufgabe wird gemäß der Erfindung gelöst durch einen Kolben für eine Kolben-Zylinder-Anordnung, insbesondere Stoßdämpferkolben, mit einem Kolbenkörper, der auf seiner Umfangsfläche in einem an ein Kolbenende angrenzenden Bereich mit wenigstens einem umlaufenden, die Umfangsfläche überragenden Umlaufsteg versehen ist, an den sich in Richtung auf das andere Kolbenende erstreckende, parallel mit Abstand nebeneinander angeordnete längslaufende Stützstege anschließen, wobei jeweils zwei benachbarte Stützstege eine nutförmige Ausnehmung begrenzen, die an ihren dem Umlaufsteg abgewandten Enden in Längsrichtung offen sind, und mit einer manschettenförmigen Dichtung aus einem warmverformbaren Dichtungsmaterial, die auf den Kolbenkörper so aufgeformt ist, daß sowohl der Umfangssteg als auch die Stützstege zumindest über einen Teil ihrer Höhe in das Material der Dichtung eingeformt sind, wobei die längslaufenden Stützstege am Kolbenkörper in bezug auf die Kolbenachse unter einem Winkel auf der Umfangsfläche verlaufen. Überraschenderweise hat sich herausgestellt, daß es für eine gute Abdichtung zwischen der manschettenförmigen Dichtung des Kolbens einerseits und der Innenwandung des Zylinders andererseits nicht erforderlich ist, daß die Dichtung auf der vollen Höhe des Kolbenkörper anliegt. Es genügt, wenn sich die Dichtmanschette in Umfangsrichtung auf dem relativ schmalen Umlaufsteg fest abstützt. Es hat sich ferner überraschenderweise herausgestellt, daß es für eine einwandfreie und zuverlässige Verbindung zwischen Dichtung und Kolbenkörper nicht erforderlich ist, daß die nutförmigen Ausnehmungen zwischen den längslaufenden Stützstegen vom Dichtungsmaterial vollständig ausgefüllt sind, wie dies aus EP-A-0 658 611 bekannt ist. Es hat sich für Stoßdämpferkolben, auf die die manschettenförmige Dichtung in der in EP-A-682 190 beschriebenen Weise aufgeformt wird, herausgestellt, daß es genügt, wenn außer dem Umlaufsteg auch die längslaufenden Stützstege nur über einen Teil ihrer Höhe in das Material der Dichtung eingeformt werden. Einerseits ergibt sich hierbei ein einwandfreier Formschluß zwischen der manschettenförmigen Dichtung und dem Kolbenkörper, und zwar sowohl in Längsrichtung als auch in Umfangsrichtung und zum anderen nur eine mäßige Umformung des Dichtungsmaterials, so daß nicht nur geringere Preßkräfte aufzubringen sind, sondern auch in wesentlich geringerem Maße ein Materialfluß bei der Umformung erfolgt und damit eine nachteilige Beeinflussung der Materialstruktur praktisch vermieden wird. Selbst bei einer Umformung der Kreisringscheibe in einem solchen Maße, daß die nutförmigen Ausnehmungen vollständig ausgefüllt werden, ergibt sich durch die in der in Erstreckung der Ausnehmung erfolgenden Bewegung des Kolbenkörpers eine Umformung des Dichtungsmaterials in Querrichtung und somit ein günstiger "Materialfluß", so daß auch bei dieser Umformung eine nachteilige Beeinflussung der Materialstruktur vermieden wird. Da durch die nur teilweise Einformung der Stützstege in das Dichtungsmaterial die dazwischen liegenden nutförmigen Ausnehmungen nicht vollständig ausgefüllt werden, verbleibt ein genügender Freiraum, in dem das Dichtungsmaterial bei Ausdehnungen infolge Temperaturerhöhungen ausweichen kann, der Kolben jedoch über die längslaufenden Stützstege einwandfrei geführt ist. Zweckmäßig ist es hierbei, wenn sich die Längsstege bis an das Ende des Kolbenkörpers erstrecken.

Durch die Schräganordnung der Stützstege ergibt sich der Vorteil, daß der Kolben über seine Dichtung in Umfangsrichtung gesehen vollflächig aufliegt, da sich bei einer entsprechenden Schrägstellung der Längsstege gegenüber der Kolbenachse eine Überdeckung der jeweils zwischen zwei Längs-stegen liegenden Nut in Längsrichtung ergibt. Damit ist ein gleichmäßiges Tragbild der Oberfläche der Dichtung über die Kolbenhöhe gegeben, auch wenn das Dichtungsmaterial über den nicht vollständig ausgefüllten nutförmigen Ausnehmungen um geringes Maß einfallen sollte. Da die mechanische Beanspruchung der formschlüssigen Verbindung zwischen der Dichtung und dem Kolbenkörper praktisch nur in Bewegungsrichtung erfolgt, bietet die Schräganordnung der Stützstege eine zusätzliche, in Bewegungsrichtung abstützende Komponente.

In vorteilhafter weiterer Ausgestaltung der Erfindung ist vorgesehen, daß die manschettenförmige Dichtung jeweils mit ihren Rändern die zugeordneten Stirnflächen des Kolbenkörpers überragt. Da die manschettenförmige Dichtung nach dem bekannten Verfahren aus einer Kreisringscheibe hergestellt wird, kann das in EP-A-0 682 190 beschriebene Phänomen der "Rückerinnerung" des Dichtungsmaterials dazu genutzt werden, daß der den Innendurchmesser der Kreisringscheibe begrenzende Rand nach dem Aufbringen auf den Kolbenkörper sich nach innen zusammenzieht und der vom äußeren Rand der Kreisringscheibe herrührende Rand der manschettenförmigen Dichtung sich nach außen zurückstellt und hierbei nach Art einer Dichtlippe die übrige Umfangsfläche der manschettenförmigen Dichtung überragt. Wird der Kolbenkörper so eingebaut, daß die mit dem lippenförmig nach außen weisenden Rand versehene Kolbenfläche bei der Verwendung als Stoßdämpferkolben der Druckseite, also der mit hoher Last beaufschlagten Seite, zugekehrt ist und die Kolbenfläche mit dem nach innen zurückspringenden Rand auf der sogenannten Zugseite angeordnet ist, dann ergibt sich eine verbesserte Abdichtung des Kolbens im Stoßdämpferzylinder bei der Druckbelastung, da die Hydraulikflüssigkeit im lippenförmigen Rand an die Zylinderwandung anpreßt. Beim Zurückfedern, also bei Zuglast, kann dann infolge des geringen Spiels zwischen Kolbenwandung und Zylinderwandung in geringem Maße die Hydraulikflüssigkeit in diesen Zwischenraum eintreten und hierbei für eine Schmierung bis hin zur Anlagekante des lippenförmig an der Zylinderwandung anliegenden Randes der manschettenförmigen Dichtung gelangen und so hier für eine einwandfreie Schmierung und damit eine Verminderung des Verschleißes der Dichtung sorgen. Da der Strömungswiderstand durch diesen geringen Spielspalt zwischen der Dichtungsfläche des Kolbens und der Zylinderwandung um ein erhebliches höher ist als der Durchflußwiderstand durch die überströmenden Kanäle im Kolbenkörper, ergibt sich praktisch keine Leistungsminderung.

Weitere Ausgestaltungen der Erfindung sind in den Unteransprüchen angegeben.

Die Erfindung wird anhand schematischer Zeichnungen eines Ausführungsbeispiels näher erläutert. Es zeigen:
- Fig. 1: einen Teilschnitt in Achsrichtung durch eine Kolben-Zylinder-Anordnung für einen Stoßdämpfer,
- Fig. 2: eine Aufsicht auf den Kolben in Richtung des Pfeiles A,
- Fig. 3: eine Seitenansicht des Kolbens, teilweise im Schnitt,
- Fig. 4: einen vergrößerten Teilschnitt durch den Kolben der Anordnung gemäß Fig. 1.

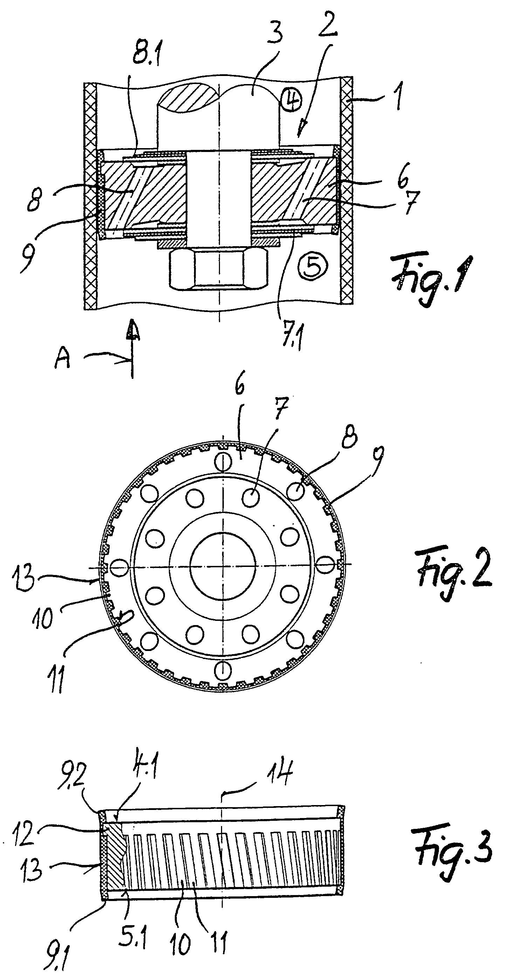

Fig. 1 zeigt einen axialen Schnitt durch einen Stoßdämpfer, der zwei relativ zueinander bewegbare Teile, beispielsweise eine Fahrzeugachse und einen Fahrzeugrahmen miteinander verbindet. Der Stoßdämpfer weist einen Zylinderteil 1 auf, der mit einem der beiden relativ zueinander bewegbaren Teile verbunden ist. Im Zylinder 1 ist ein Kolben 2 geführt, der an einer Kolbenstange 3 befestigt ist, die mit ihrem freien Ende am anderen Teil der beiden relativ zueinander bewegbaren Teile festgelegt ist. Der Zylinder 1 ist hierbei beidseitig geschlossen und mit einer Hydraulikflüssigkeit gefüllt, so daß die Kolben-Zylinder-Anordnung doppelt wirkend ausgelegt ist, wobei der Kolben zwei Zylinderräume 4, 5 voreinander trennt.

Der Kolbenkörper 6 des Kolbens 2 weist mehrere nebeneinander verlaufende Durchtrittskanäle 7, 8 auf. Die Durchtrittskanäle 7, 8 sind jeweils auf ihrer in der Funktion noch zu erläuternden Austrittsseite mit einem Drosselventil 7.1 bzw. 8.1 abgedeckt. Die Anordnung ist hierbei so getroffen, daß jeweils mehrere Durchtrittskanäle 7 und mehrere Durchtrittskanäle 8 alternierend um die Zylinderachse angeordnet vorgesehen sind.

Die Umfangsfläche des Kolbens 2 ist mit einer manschettenförmigen Dichtung 9 versehen, die für eine Abdichtung des Zylinderraums 4 gegenüber dem Zylinderraum 5 sorgt. Bei einer Bewegung des Kolbens 2 in den Zylinderraum 4 hinein, wird die Flüssigkeit durch die Durchtrittskanäle 7 gegen die Rückstellkraft der Drosselventile 7.1 gepreßt. Die Durchtrittsöffnungen 8 werden hierbei durch den auf die Drosselventile 8.1 lastenden Druck des Flüssigkeitsraums 4 verschlossen gehalten. Bei einer Bewegung in umgekehrter Richtung werden die Durchtrittskanäle 7 durch die Drosselventile 7.1 geschlossen, während die Flüssigkeit durch die durchströmenden Kanäle 8 aus dem Zylinderraum 5 in den Zylinderraum 4 zurückströmen kann.

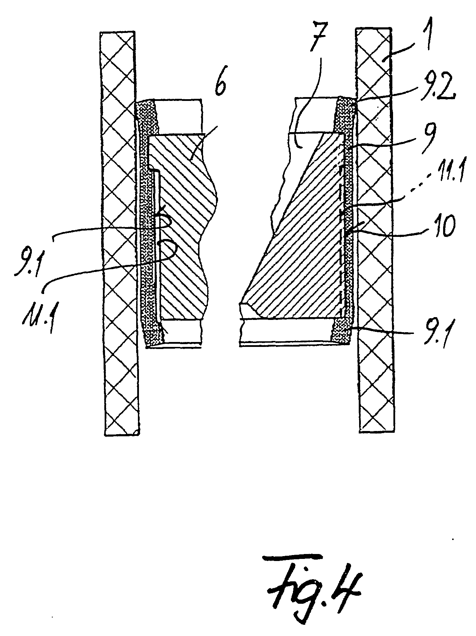

In Fig. 2 ist eine Aufsicht in Richtung des Pfeiles A auf dem Kolben 2 in Fig. 1 ohne die Anordnung der Drosselventile 7.1 und 8.1 wiedergegeben. Der Kolbenkörper 6 ist auf seiner Umfangsfläche mit einer Vielzahl von längslaufenden Stützstegen 10 versehen, die jeweils entsprechende nutformige Ausnehmungen 11 begrenzen. Bei dem hier dargestellten Ausführungsbeispiel sind die nutförmigen Ausnehmungen 11 so angeordnet, daß sie sich von einer der Stirnflächen, beispielsweise der Stirnfläche 5.1 des Kolbenkörpers 6 bis an einen Umlaufsteg 12 erstrecken (Fig. 3), der am anderen Ende des Kolbenkörpers 6 im Bereich nahe oder an der Stirnfläche 4.1 angrenzend in Umfangsrichtung verläuft und die nutförmigen Ausnehmungen 11 an diesem Kolbenende begrenzt. Der Umlaufsteg 12 und die längslaufenden Stützstege 10 sind auf der Außenfläche des Kolbenkörpers 6 niveaugleich.

Die auf der Umfangsfläche des Kolbenkörpers 6 angeordnete manschettenförmige Dichtung 9 besteht aus einem warmverformbaren Kunststoff, vorzugsweise aus PTFE. Die manschettenförmige Dichtung 9 ist bei dem hier dargestellten Ausführungsbeispiel durch Warmumformung aus einer Kreisringscheibe auf die Umfangsfläche des Kolbenkörpers 6 aufgeformt worden, wobei der Rand 9.1 der Dichtung 9 durch den Innenrand der Kreisringscheibe gebildet wird, während der Rand 9.2 durch den Außenrand der Kreisringscheibe gebildet wird. Die Kreisringscheibe war in ihrer Ringbreite so bemessen, daß sie breiter war als die Dicke des Kolbenkörpers 6 in axialer Erstreckung, so daß nach dem Umformen der vom Innenrand der Kreisringscheibe herrührende Rand 9.1 nach innen eingezogen ist, während der vom Außenrand der Kreisringscheibe herrührende Rand 9.2 nach außen abgebogen ist und in der Funktion eine Dichtlippe bildet.

Bei der Warmumformung der Kreisringscheibe sind die Stege 10 und 12 nur über einen Teil ihrer Höhe in das Material der manschettenförmigen Dichtung 9 eingeformt, so daß zwischen dem Material der Dichtung 9 und dem Boden nutförmigen Ausnehmungen 11 noch ein gewisser Freiraum verbleibt, so daß beim Formen der Dichtung 9 das Dichtungsmaterial frei und ohne Zwängung in die Nut 11 einfließen kann. Bei diesem Umformungsvorgang wird die zylindrische Außenfläche 13 der Dichtung 9 gleichzeitig kalibriert, so daß die gewünschten Toleranzen zum Innendurchmesser des Zylinders 1 eingehalten werden können. Da insbesondere bei der Verwendung einer derartigen Kolben-Zylinder-Anordnung als Stoßdämpfer im Betrieb eine Erwärmung des Gesamtsystems auftritt, erlaubt dieser verbleibende Freiraum im Nutgrund innerhalb gewisser Grenzen auch eine Ausdehnung des Dichtungsmaterials in die Nut hinein, so daß der Verschleiß der Dichtung auf der an die Ränder angrenzenden zylindrischen Umfangsfläche der Dichtung 9 herabgesetzt wird.

In Fig. 3 ist der Kolben 2 in einer Seitenansicht mit abgenommener Dichtung 9 dargestellt. Die Seitenansicht läßt erkennen, daß die nutförmigen Ausnehmungen 11 in bezug auf die Kolbenachse 14 unter einem Winkel verlaufen, wobei der Winkel beispielsweise so bemessen ist, daß , in Längsrichtung gesehen, das der Stirnfläche 4.1 zugekehrte Ende eines längslaufenden Stützsteges 10 das endseitig offene Ende der benachbarten nutförmigen Ausnehmung 11 an der Stirnseite 5.1 des Kolbenkörpers 6 überdeckt und so bei einer Bewegung des Kolbens in Längsrichtung im Zylinder 1 die die Oberfläche des Umlaufstegs 12 und der längslaufenden Stützstege 10 abdeckende manschettenförmige Dichtung 9 eine vollflächige Abdeckung der Zylinderinnenwandung bewirkt. Bei der ständig wechselnden Hin- und Herbewegung, beispielsweise eines Stoßdämpferkolbens, ist so vermieden, daß sich Längsriefen auf der Zylinderinnenwandung einarbeiten können. Zugleich bietet die Schrägstellung der Stützstege 10 eine in Bewegungsrichtung wirksame zusätzliche Abstützung der Dichtung 9 auf dem Kolbenkörper 6. Gleichwohl ist der Kolben 2 über seine Höhe insgesamt praktisch kippfrei abgestützt.

Die vergrößerte Darstellung eines Kolbens 2 im Teillängsschnitt gemäß Fig. 4 läßt erkennen, daß die manschettenförmige Dichtung 9 so auf den Kolbenkörper 6 aufgeformt ist, daß sowohl der Umlaufsteg 12 als auch die längslaufenden Stützstege 10 nur über einen Teil ihrer Höhe in das Dichtungsmaterial eingeformt sind, so daß jeweils an den nutförmigen Ausnehmungen 11 zwischen der Innenfläche 9.3 der manschettenförmigen Dichtung 9 und dem Grund 11.1 der nutförmigen Ausnehmungen 11 ein geringer Freiraum verbleibt (linke Seite der Fig. 4). Die längslaufenden Stützstege 10 sind jedoch durchgehend in gleicher Dicke wie der Umlaufsteg 12 mit der manschettenförmigen Dichtung 9 abgedeckt. Je nach Wandstärke der manschettenförmigen Dichtung 9 im Bereich der Stützstege 10 und je nach der Nachgiebigkeit des Dichtungsmaterials kann bei einer Bewegung des Kolbens 2 in Richtung des Pfeiles 15 der sich aufbauende Druck im Zylinderraum 5 auch im Freiraum zwischen der Innenfläche 9.3 und dem Nutgrund 11.1 wirksam werden und diesen Teilbereich der Dichtung geringfügig aufweiten und die Abdichtung zwischen Kolben und Zylinderwand verbessern.

Ein derartiger Kolbenkörper 6 kann bevorzugt aus einem oder auch zwei pulvermetallurgisch hergestellten Teilelementen gebildet werden. Er wird als Ganzes oder in Form von Teilelementen aus einem sintermetallurgischen Pulver gepreßt. Gepreßte Teilelemente werden dann in einer Fügeoperation entsprechend zusammengefügt. Der einteilige oder zweiteilige Preßling wird anschließend gesintert. Eine spanlose Formgebung einer derartigen Geometrie ist kostengünstiger als eine spangebende Herstellung.

Es ist auch möglich, in Richtung der Längsachse 14, also gerade verlaufende Stützstege 10 vorzusehen. Auch die Länge der Stützstege 10 kann kürzer gewählt werden, so daß bis zur Stirnfläche 5.1 eine glatte, tiefer liegende Ringfläche verbleibt. Bei einer pulver-metallurgischen Fertigung ist es jedoch zweckmäßig, wenn sich die Stützstege 10 vom Umlaufsteg 12 bis an das andere Ende des Kolbenkörpers 6 erstrecken, da sich dann durch das Pressen und Sintern ein Kolbenkörper mit gleichmäßiger Materialdichte ergibt. Ebenso ist es möglich, am Kolbenkörper eine andere Gestaltung der Durchtrittskanäle 7, 8 vorzusehen. Bei einem aus zwei Teilelementen zusammengefügten Kolbenkörper ist es auch möglich, beiden Stirnseiten jeweils einen Umlaufsteg 12 zuzuordnen.

## Patentansprüche

1. Kolben für eine Kolben-Zylinder-Anordnung, insbesondere Stoßdämpferkolben, mit einem Kolbenkörper (6), der auf seiner Umfangsfläche in einem an ein Kolbenende (4.1) angrenzenden Bereich mit wenigstens einem umlaufenden, die Umfangsfläche überragenden Umlaufsteg (12) versehen ist, an den sich in Richtung auf das andere Kolbenende (5.1) erstreckende, parallel mit Abstand nebeneinander angeordnete längslaufende Stützstege (10) anschließen, wobei jeweils zwei benachbarte Stützstege (10) eine nutförmige Ausnehmung (11) begrenzen, die an ihren dem Umlaufsteg (12) abgewandten Enden in Längsrichtung offen sind, und mit einer manschettenförmige Dichtung (9) aus einem warmverformbaren Dichtungsmaterial, die auf den Kolbenkörper (6) so auf geformt ist, daß sowohl der Umlaufsteg (12) als auch die Stützstege (10) zumindest über einen Teil ihrer Höhe in das Material der manschettenförmigen Dichtung (9) eingeformt sind, **dadurch gekennzeichnet, daß** die längslaufenden Stützstege (10) am Kolbenkörper (6) in bezug auf die Kolbenachse (14) unter einem Winkel auf der Umfangsfläche verlaufen.

2. Kolben nach Anspruch 1, **dadurch gekennzeichnet, daß** sich die längslaufenden Stützstege (10) bis an das Ende (5.1) des Kolbenkörpers (6) erstrecken.

3. Kolben nach Anspruch 1 oder 2, **dadurch gekennzeichnet, daß** die manschettenförmige Dichtung (9) jeweils mit ihren Rändern (9.1, 9.2) die zugeordneten Stirnflächen (4.1, 5.2) des Kolbenkörpers (6) überragt.

4. Kolben nach einem der Ansprüche 1 bis 3, **dadurch gekennzeichnet, daß** der Kolbenkörper (6) pulvermetallurgisch hergestellt ist.

5. Kolben nach einem der Ansprüche 1 bis 4, **dadurch gekennzeichnet, daß** die manschettenförmige Dichtung (9) aus PTFE als wärmeverformbarem Kunststoff besteht.

6. Kolben nach einem der Ansprüche 1 bis 5, **dadurch gekennzeichnet, daß** die manschettenförmige Dichtung (9) zumindest in ihrem die Stege (10, 12) überdeckenden Bereich unter Kalibrierung ihrer Außenfläche (13) aufgepreßt ist.

## Claims

1. Piston for a piston-cylinder arrangement, in particular shock absorber piston, with a piston body (6) which is provided with at least one circulating web (12) on its peripheral area in a region which is adjacent to a piston end (4.1), which web protrudes beyond the peripheral area and is adjoined by longitudinal support webs (10) which extend in the direction of the other piston end (5.1) and are arranged side-by-side in parallel at a distance from one another, wherein each two adjacent support webs (10) define a groove-shaped recess (11), which recesses are open at their ends remote from the circulating web (12) in the longitudinal direction, and with a collar-shaped seal (9) of a thermoforming sealing material which is formed onto the piston body (6) such that both the circulating web (12) and the support webs (10) are formed into the material of the collar-shaped seal (9) at least over a part of their height, **characterised in that** the longitudinal support webs (10) extend at an angle to the peripheral area in relation to the piston axis (14).

2. Piston according to Claim 1, **characterised in that** the longitudinal support webs (10) extend up to the end (5.1) of the piston body (6).

3. Piston according to Claim 1 or 2, **characterised in that** each of the edges (9.1, 9.2) of the collar-shaped seal (9) protrude beyond the associated end faces (4.1, 5.2) of the piston body (6).

4. Piston according to any one of Claims 1 to 3, **characterised in that** the piston body (6) is manufactured by powder metallurgy.

5. Piston according to any one of Claims 1 to 4, **characterised in that** the collar-shaped seal (9) consists of PTFE as thermoforming plastics material.

6. Piston according to any one of Claims 1 to 5, **characterised in that** the collar-shaped seal (9) is pressed on, while calibrating its exterior surface, at least in its region which overlaps the webs (10, 12).

## Revendications

1. Piston pour ensemble piston-cylindre, en particulier piston d'amortisseur, comprenant un corps de piston (6) qui, sur sa surface circonférentielle, dans une zone adjacente à une extrémité de piston (4,1), est pourvu d'au moins une nervure périphérique (12) saillant de la surface circonférentielle, à laquelle sont contiguës des nervures d'appui (10) longitudinales juxtaposées parallèlement à distance les unes des autres et s'étendant en direction de l'autre extrémité de piston (5,1), dans lequel deux nervures d'appui (10) voisines délimitent à chaque fois un évidement respectif (11) en forme de rainure, lesquels évidements sont ouverts en direction longitudinale au niveau de leurs extrémités opposées à la nervure périphérique (12), et comprenant un joint d'étanchéité (9) en forme de manchette en un matériau d'étanchéité déformable à chaud, qui est formé sur le corps de piston (6) de telle façon qu'aussi bien la nervure circulaire (12) que les nervures d'appui (10) sont encapsulées, du moins sur une partie de leur hauteur, dans le matériau du joint d'étanchéité (9) en forme de manchette, **caractérisé en ce que** les nervures d'appui longitudinales (10) sur le corps de piston (6) s'étendent sur la surface circonférentielle sous un angle par rapport à l'axe de piston (14).

2. Piston selon la revendication 1, **caractérisé en ce que** les nervures d'appui longitudinales (10) s'étendent jusqu'à l'extrémité (5.1) du corps de piston (6).

3. Piston selon la revendication 1 ou 2, **caractérisé en ce que** le joint d'étanchéité (9) en forme de manchette saillit avec ses bords respectifs (9,1, 9,2) des surfaces frontales (4.1, 5.2) associées du corps de piston (6).

4. Piston selon une des revendications 1 à 3, **caractérisé en ce que** le corps de piston (6) est réalisé par métallurgie des poudres.

5. Piston selon une des revendications 1 à 4, **caractérisé en ce que** le joint d'étanchéité (9) en forme de manchette est réalisé en PTFE en tant que matériau plastique déformable à chaud.

6. Piston selon une des revendications 1 à 5, **caractérisé en ce que** le joint d'étanchéité (9) en forme de manchette est emmanché à force, du moins dans sa zone recouvrant les nervures (10, 12), en calibrant sa surface extérieure (13).
